# EUROPEAN PATENT SPECIFICATION

(11) **EP 3 045 762 B1**
(45) Date of publication and mention of the grant of the patent: **13.03.2019**
(21) Application number: 15151045.0
(22) Date of filing: 14.01.2015
(51) Int. Cl.: F16F 1/373

(54) **Elastically deformable damper**
Elastisch verformbarer Dämpfer
Amortisseur élastiquement déformable

(43) Date of publication of application: 20.07.2016
(73) Proprietor: Volvo Car Corporation, 40531 Göteborg (SE)
(72) Inventor: Johansson, Jonas, 46230 Vänersborg (SE); Jalkler, Quintus, 44253 Ytterby (SE)
(74) Representative: Kransell & Wennborg KB

(56) References cited:
- EP-A1- 0 899 476
- EP-A1- 2 106 982
- DE-A1- 10 246 030
- DE-A1-102007 024 326
- DE-A1-102009 060 458
- US-A- 2 716 566
- US-A1- 2003 002 919
- US-A1- 2004 113 339

## Description

### TECHNICAL FIELD

The disclosure relates to a brake system comprising at least one elastically deformable damper for a vehicle comprising an upper and a lower portion separated by a waist portion. An aperture extends through the upper-, the lower- and the waist portion along a longitudinal center line. The waist portion has a convex shape providing an improved elastically deformable damper. It also relates to an ABS brake system comprising at least one such elastically deformable damper.

### BACKGROUND

The use of elastically deformable dampers in vehicles and the vehicle's brake system in particular, put high demands on existing elastically deformable damper designs. The development towards more silent vehicles in combination with more autonomous functions activated by a hydraulic electronic control unit (HECU) of an ABS brake system increase the demands on elastically deformable dampers to absorb vibrations. At the same time, endurance and lifetime requirements for the elastically deformable dampers may not be compromised.

A conventional elastically deformable damper for a HECU is provided with an upper portion, a lower portion separated by a waist portion. An aperture generally extends through the elastically deformable damper to permit the attachment of the HECU to a bracket. However, there is a need for improvements of conventional elastically deformable dampers for meeting the higher demands of low noise, efficient vibration control and long life time expectancy for the elastically deformable damper. Document EP 2 106 982 A1, which is considered the closest prior art, discloses the preamble of claim 1.

### SUMMARY

It is an object of the present invention to provide for a brake system comprising at least one improved elastically deformable damper, or to at least partly solve the above mentioned drawbacks, or to at least provide for a useful alternative. The objects are at least partly met by a brake system according to claim 1, which comprises at least one elastically deformable damper for a vehicle comprising an upper portion and a lower portion separated by a waist portion. An aperture extends through the upper-, lower-, and the waist portion along a longitudinal centre line. The waist portion is adapted to receive and be retained to a portion of a bracket in a cooperative manner with said upper and said lower portions.

The waist portion said has a cross section with a protruding outer surface with respect to the longitudinal center line when the elastically deformable damper is in a relaxed state.

The elastically deformable damper, which hereafter is only referred to as the damper, provide a damper which is wear resistant and less perceptible to fatigue. It has an improved ability to withstand high frequency vibrations and the type of vibrations imparted from the road. It further has good noise reducing properties. It is also believed that it provide a progressive resistance along the width, the height and the length. It has also been found that it is favorable for autonomous assembly production methods. The damper can be said to provide improved noise, vibration and harshness properties with respect to durability.

The protruding outer surface may have different shapes. The outer surface can have a triangular shape, the shape of a truncated cone, or a convex shape or similar. Preferably the waist portion has an outer surface having a convex shape with respect to the longitudinal centre line when the elastically deformable damper is in a relaxed state.

The aperture can have a varying diameter with at least a first, a second and a third diameter. The third diameter is larger than the first and the second diameters when the elastically deformable damper is in a relaxed state. Having an aperture with varying diameter provides for an aperture which can have a play between the screw intended to attach the damper and the interior wall of the aperture. It is believed that such play reduce the risk that the damper is damaged by the screw when vibrating.

The aperture has a first and a second opening wherein the first and the second diameter are the diameters of the first and the second openings of the aperture. This provide a damper which aperture is tighter about the screw at the regions of the opening than between the openings of the aperture.

The aperture has the third diameter at a centre section of the aperture. It is favourable if the centre section substantially corresponds to the position of the waist portion of the damper with respect to the longitudinal centre line. The damper can be provided with an increase size of the aperture at the same section as the waist portion, thus having a substantially convex type of aperture, and a convex outer surface of the waist portion. The centre section of the aperture preferably overlaps the position of the waist portion of the damper with respect to the longitudinal centre line.

The damper has a top surface and a bottom surface. More precisely the upper portion has a top surface and the lower portion has a bottom surface. For this purpose, the enveloping surface of truncated cone is not considered to be a part of the bottom surface. The top surface of the upper portion and/or bottom surface of the lower portion can be arranged with a 3D pattern. For example, top surface of the upper portion and/or bottom surface of the lower portion can be provided with alternating ridges and grooves. Such alternating ridges and grooves preferably extend radially from the longitudinal centre line of the aperture, preferably to the periphery of the top and bottom surfaces respectively. It may be that the alternating ridges and grooves, i.e. the 3D pattern, only covers a portion of the top surface of the upper portion and/or the bottom surface of the lower portion of the damper. The 3D pattern can covers that portion of the top surface of the upper portion of the damper which in turn is covered by a screw and more specifically by the screw head after assembly therewith for example.

The elastically deformable damper can be made of a rubber and/or rubber like material.

It has been found advantageous that the outer surface of the convex shape of the waist portion has a radius of from 0.8-8.0 mm, preferably from 1.0-5.0 mm; more preferably from 1-3 mm. Dependent on the size of the unit which the damper is intended to cooperate with, the appropriate size in the radius can be selected.

The height of the waist portion can be of from 0.8-16 mm, preferably 0.8-10.0 mm, more preferably 1.0-6.0 mm.

The upper and the lower portion can have the same shape or different shape. The lower portion can have a shape of a truncated cone shaped and/or the upper portion can have a shape of a cylinder for example. A damper with a lower portion having the shape of a truncated cone has been found to be easy to mount in an automatic production process, and is thus favourable from a manufacturing point of view.

It is also within the boundaries of the present invention to provide a brake system for a vehicle comprising at least one elastically deformable damper as described herein, preferably two or more dampers, and a vehicle comprising such brake system. The brake system is preferably an ABS brake system. The damper is preferably used together with a HECU of an ABS brake system.

### BRIEF DESCRIPTION OF THE DRAWINGS

Non-limiting embodiments of the present invention will be described in greater detail with reference to the accompanying drawings in which;
Figure 1 shows an exploded view of a HECU assembly attached to a bracket using at least one elastically deformable damper as disclosed herein;
figure 2a shows the damper of figure 1 with a view in perspective;
figure 2b shows the damper of figure 1 with a view from the side;
figure 3a shows the damper of figures 2a-2b with a view towards the lower portion having the shape of a truncated cone;
figure 3b shows a cross section of the damper of figure 3a along the line B-B;
figures 4a-4c show different possible shapes of the cross section of the waist portion of the damper.

### DETAILED DESCRIPTION OF PREFERRED EMBODIMENTS

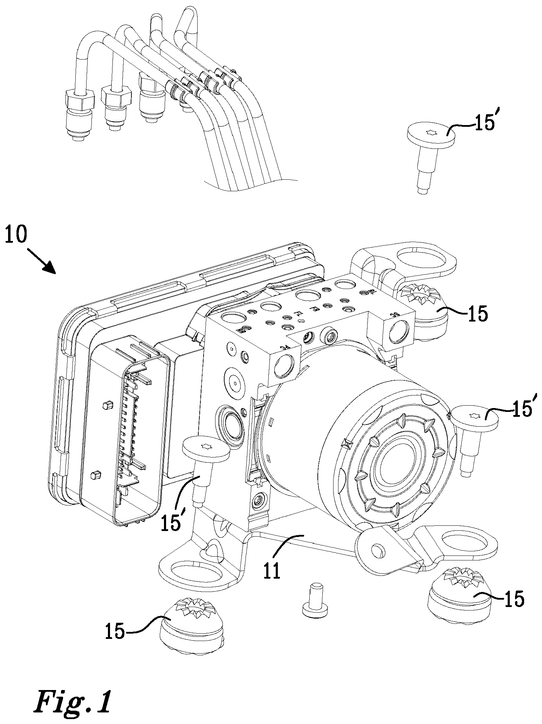

Figure 1 shows an ABS brake control module in the form of a hydraulic electronic control unit 10, hereafter referred to as HECU 10, of a brake system for a vehicle. The vehicle can be any type of vehicle such as a car, lorry, recreational vehicle (RV), motorcycle or the like. The HECU is attached to the chassis of the vehicle via a bracket 11 which in turn is attached to the vehicle chassis by damper connections. The damper connections comprise an elastically deformable damper 15, hereafter referred to as the damper 15 only, and a damper screw 15'. In the shown embodiment the bracket 11 is attached to the vehicle chassis at three damper connections however, the HECU 10 can be attached using one or more damper connections either via a bracket as shown in figure 1 or directly using damper connections.

The damper 15 is adapted to absorb a portion of the vibrations which are imparted by the HECU 10 as the HECU 10 pump hydraulic fluid through the system. It is further designed to withstand vibrations imparted to the HECU 10 via the vehicle chassis as the vehicles engine vibrates and vibrations imparted as the vehicle travels along a road. The damper thus can absorb high frequency vibrations as well as the low and distinct vibrations from the road

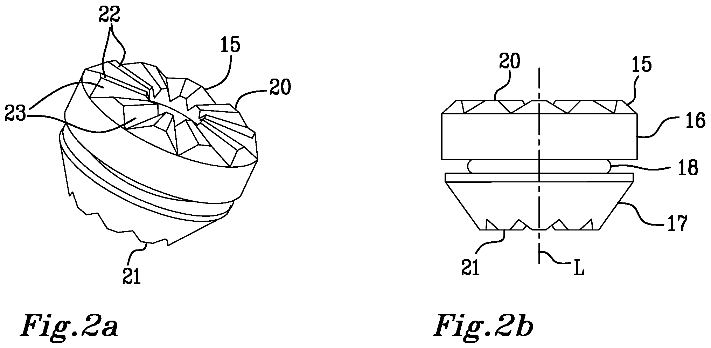

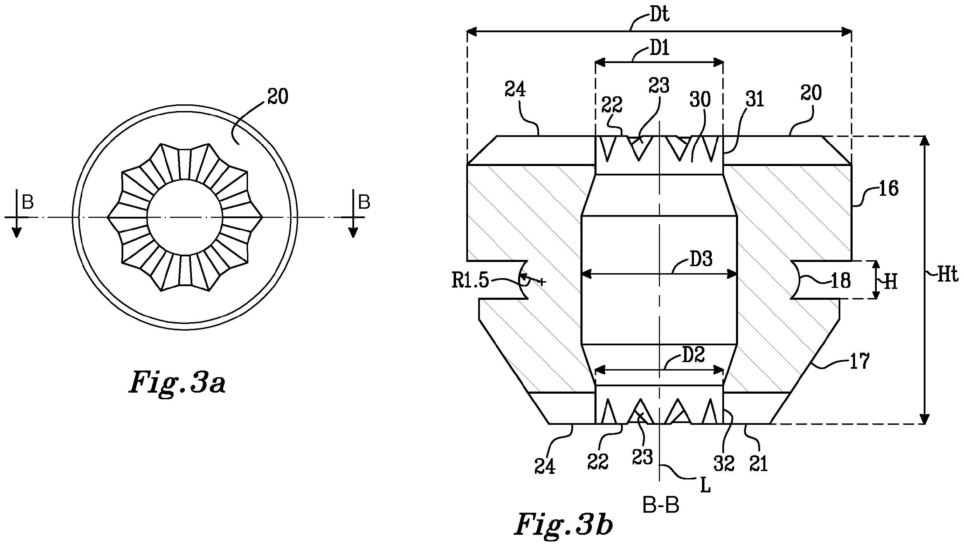

Figures 2a-2b shows the damper 15 in greater detail with a view in perspective and from the side respectively. With reference to both figures 2a and 2b, the damper 15 has an upper and a lower portion 16, 17 separated by a waist portion 18. An imaginary longitudinal center line L extends through the center of the damper 15. The waist portion 18 has a slightly smaller diameter than the upper and the lower portions 16, 17 permitting a portion of a bracket (shown in figure 1) to be received and retained between the space formed between the upper and the lower portions 16, 17. The distance between the upper and the lower portions 16, 17 is thus adapted to the thickness of the bracket, or other connection member, by which the damper is intended to be attached to. The waist portion 18 of the damper 15 is thus generally smaller than the adjacent portions. The waist portion is thus adapted to receive and retain a portion of a bracket in a cooperative manner with the upper and the lower portions. The upper and the lower portions are equivalent with a first and a second portion but defined as upper and lower portions when viewed as shown in figures 2b and 3b.

As is noticeable, the upper portion 16 has a substantially cylindrical shape before it transcends to the waist portion 18, while the lower portion 17 has substantially the shape of a cone, or more specifically the shape of a truncated cone. It should be noted that the damper 15 can be provided with an upper and a lower portion having the same shape or different shape, as shown in figures 2a-2b. The upper and lower portions of the damper can both be cylindrical or cone shaped, truncated or not truncated. Other shapes and forms are possible such as polygonal shapes having three, four, five or more corners. The damper 15 has an upper and a lower side 20, 21. The upper side 20 of the damper is intended to brace against a damper screw head (shown in figure 1), while the lower side 21 of the damper 15 is intended to brace against the HECU 10 (shown in figure 1), or any other unit subject of requiring damping function. As is noticed in figures 2a-2b, the upper and the lower side 20, 21 of the damper 15 has alternating ridges and grooves 22, 23 which has a radial extension perpendicular to the longitudinal center line L. The damper can thus be provided with an upper and/or lower side 20, 21 having a 3D shape.

The shape of the ridges 22 and the grooves 23 shaped between the ridges 22 may vary. Further, the damper 15 can have one flat top and/or bottom surface, or optionally the opposing surface having a 3D shape such as the mentioned alternating ridges 22 and grooves 23. The shape of the grooves 23 are advantageous substantially triangular.

Figure 3a shows the damper of figures 2a-2b with a view towards the lower portion of the damper. Figure 3b is a cross section along the line B-B in figure 3a. Figure 3b shows the upper portion 16 and the lower portion 17 and the intermediate waist portion 18. As is noticeable in figure 3b, the waist portion 18 has a cross section with a protruding outer surface with a convex shape with respect to the longitudinal center line L. It is believed that the convex shape of the waist portion 18 provides the damper 15 with improved damping properties. The damper 15 is wear and fatigue resistant for example.

The convex shape of the waist portion 18 of the damper 15 can be different dependent on which specific properties that are desired. The convex shape can be defined by the waist portion 18 having a radius of 1.5 mm. A suitable radius is from 0.8-8.0 mm, preferably from 1.0-5.0 mm, more preferably from 1-3 mm.

The waist portion 18 has a height H of from 0.8-16 mm, preferably 0.8-10.0 mm, more preferably 1.0-6.0 mm. It has been favorable that the height of the waist portion is slightly less than the two times the radius.

The damper 15 has an aperture 30 which extends through the damper and along the longitudinal center line L. The aperture 30 is adapted to permit a damper screw to extend through the damper 15. It has been found that by having an aperture with a varying radius, i.e. which not simply has the shape of a straight cylinder, an improved damper can be provided. The aperture 30 can have a full cylindrical shape, or have a shape having a varying radius as shown in figure 3b for example. The aperture 30 shown in figure 3b has a first and a second opening 31, 32 each having a diameter D1, D2. The aperture 30 further has a center section Cs having a third diameter D3 which is larger than the first and the second diameters D1, D2 of the first and the second openings 31, 32. The aperture 30 is thus narrower at the openings 31, 32 and wider at the center, and specifically at section of the aperture 30 corresponding to the waist portion 18 of the damper 15. The aperture 30 thus provides a play between the damper screw and the damper walls in the aperture 30. It is believed that the play provide an improved damper having improved vibration absorbing properties. The damper 15 thus can be said to have an aperture comprising a void which provides a play for an attachment screw which extends through the aperture of the damper when the damper is in the relaxed state. The play should be larger at the center of the aperture than at the openings of the aperture and preferably taper down to the more narrow openings 31, 32 of the aperture 30 as shown in figure 3b for example. The aperture 30 can optionally be substantially oval shaped or oval shaped.

Hence it is within the boundaries of the present invention to provide a damper having an elastically deformable damper for a vehicle comprising a head portion and a base portion separated by a waist portion. The elastically deformable damper further has an aperture which extends through the head-, base, and waist portion along a longitudinal centre line. The aperture has a varying diameter when the elastically deformable damper is in a relaxed state providing, with a larger diameter at the centre of the aperture as compared to the openings of the aperture.

The damper 15 has a total diameter Dt of 30 mm in figure 3b, but could be from 20-80 mm, preferably 20-50 mm. The damper 15 further has a total height Ht of 20 mm in figure 3b, but could be from 10-60 mm, preferably 15-50 mm.

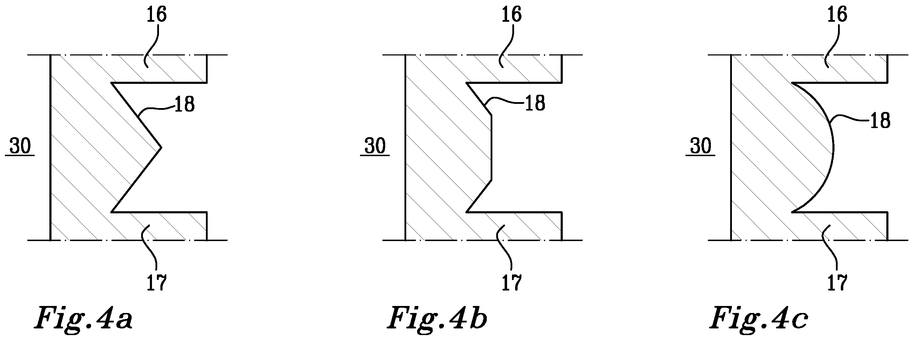

Figures 4a-4c show different shapes of the cross section of the waist portion 18 of the damper 15 and with a portion of the aperture 30 visible. As is understood the waist portion 18 may have other shapes. For example as shown in figure 4a, the waist portion may have a triangular shape or the shape of a truncated cone as shown in figure 4b. Figure 4c shows a waist portion with an unsymmetrical arc shape, which has been indicated by the arrows in figure 4c. The shapes are related to the longitudinal center line L of the damper 15. At least some of the advantages can thus be achieved by having a waist portion comprising a protruding portion, for example as described above; the waist portion may have a protruding portion in the form of a triangular shape, the shape of a truncated cone, or a convex shape or similar.

The cross sectional shapes, i.e. the protruding outer surface, described with reference to the waist portion preferably extend around the full periphery of the waist portion.

The radius R and height of the waist portion can be determined when the damper is viewed as shown in figure 3b and when the damper is in a relaxed state. The damper 15 described above is described when being in a relaxed state, i.e. before being mounted in its intended position. After being mounted the damper 15 can be deformed and the amount of deformation may be dependent on how tight the damper 15 has been mounted for example.

It should be noted that although the damper 15 is described for use with a HECU, the damper can be used with other vibrating units in a vehicle such as other pumps, e.g. fuel pumps, oil pumps, water pumps, or other control units or the like. It is also possible that the damper is used with units which does not vibrate, but are sensitive to vibrations such as computer processing units, electronic data storage units and the like. The scope of the invention however is defined by the appended claims.

## Claims

1. A brake system for a vehicle comprising at least one elastically deformable damper (15) comprising an upper portion (16) and a lower portion (17) separated by a waist portion (18), an aperture (30) extending through said upper-, lower-, and waist portion (16, 17, 18) along a longitudinal center line (L), said waist portion (18) being adapted to receive and be retained to a portion of a bracket (11) in a cooperative manner with said upper and said lower portions (16, 17), **characterized in that**
said waist portion (18) has a cross section with a protruding outer surface with respect to said longitudinal center line (L) and when said elastically deformable damper (10) is in a relaxed state, wherein said protruding outer surface has a triangular shape, the shape of a truncated cone, or a convex shape, and wherein said protruding outer surface extends around the full periphery of said waist portion (18).

2. The brake system according to any one of the preceding claims, wherein said aperture (30) has a varying diameter with at least a first, a second and a third diameter (D1, D2, D3), said third diameter (D3) being larger than said first and said second diameter (D1, D2) when said elastically deformable damper (15) is in a relaxed state.

3. The brake system according to claim 2, wherein said aperture (30) has a first and a second opening (31, 32), wherein said first and said second diameter (D1, D2) are the diameters of said first and said second openings (31, 32) of said aperture (30).

4. The brake system according to claim 3, wherein said aperture (30) has said third diameter (D3) at a center section of said aperture (30), said center section substantially corresponding to the position of said waist portion (18) of said damper (15) with respect to said longitudinal center line (L).

5. The brake system according to claim 4, wherein said center section of said aperture (30) overlaps the position of said waist portion (18) of said damper (15) with respect to said longitudinal center line (L).

6. The brake system according to any one of the preceding claims, wherein a top surface (20) of said upper portion (16) and/or bottom surface (21) of said lower portion (17) has alternating ridges (22) and grooves (23) preferably extending radially from said longitudinal center line (L) of said aperture (30), preferably to said periphery of said top and bottom surfaces (20, 21) respectively.

7. The brake system according to any one of the preceding claims, wherein said elastically deformable damper (15) is made of a rubber and/or rubber like material.

8. The brake system according to any one of the preceding claims, wherein said outer surface of said convex shape of said waist portion (18) has a radius of from 0.8-8.0 mm, preferably from 1.0-5.0 mm, more preferably from 1-3 mm.

9. The brake system according to any one of the preceding claims, wherein said waist portion (18) has a height (H) of from 0.8-16 mm, preferably 0.8-10.0 mm, more preferably 1.0-6.0 mm.

10. The brake system according to any one of the preceding claims, wherein said lower portion (17) has the shape of a truncated cone.

11. The brake system according to any of the preceding claims, wherein said upper portion (16) has the shape of a cylinder.

12. The brake system according to any one of the preceding claims, wherein said brake system is an ABS brake system.

13. A vehicle comprising a brake system according to claim 12.

## Patentansprüche

1. Bremssystem für ein Fahrzeug, umfassend zumindest einen elastisch verformbaren Dämpfer (15), der einen oberen Teil (16) und einen unteren Teil (17) umfasst, die durch einen Taillenteil (18) getrennt sind, wobei sich durch den oberen, den unteren und den Taillenteil (16, 17, 18) eine Apertur (30) entlang einer Längsmittellinie (L) erstreckt, wobei der Taillenteil (18) dazu angepasst ist, einen Teil einer Klammer (11) in einer mit dem oberen und den unteren Teil (16, 17) zusammenwirkenden Weise aufzunehmen und an selbigem gehalten zu werden,
**dadurch gekennzeichnet, dass**
der Taillenteil (18) einen Querschnitt mit einer in Bezug auf die Längsmittellinie (L) hervorragenden Außenfläche, wenn sich der elastisch verformbare Dämpfer (10) in einem entspannten Zustand befindet, wobei die hervorragende Außenfläche eine dreieckige Form, die Form eines Kegelstumpfs oder eine konvexe Form aufweist und wobei sich die hervorragende Außenfläche um den gesamten Umfang des Taillenteils (18) erstreckt.

2. Bremssystem nach einem der vorangehenden Ansprüche, wobei die Apertur (30) einen veränderlichen Durchmesser mit zumindest einem ersten, einem zweiten und einem dritten Durchmesser (D1, D2, D3) aufweist, wobei der dritte Durchmesser (D3) größer als der erste und der zweite Durchmesser (D1, D2) ist, wenn sich der elastisch verformbare Dämpfer (15) in einem entspannten Zustand befindet.

3. Bremssystem nach Anspruch 2, wobei die Apertur (30) eine erste und eine zweite Öffnung (31, 32) aufweist, wobei der erste und der zweite Durchmesser (D1, D2) die Durchmesser der ersten bzw. der zweiten Öffnung (31, 32) der Apertur (30) sind.

4. Bremssystem nach Anspruch 3, wobei die Apertur (30) den dritten Durchmesser (D3) an einem Mittelabschnitt der Apertur (30) aufweist, wobei der Mittelabschnitt im Wesentlichen der Position des Taillenteils (18) des Dämpfers (15) in Bezug auf die Längsmittellinie (L) entspricht.

5. Bremssystem nach Anspruch 4, wobei der Mittelabschnitt der Apertur (30) die Position des Taillenteils (18) des Dämpfers (15) in Bezug auf die Längsmittellinie (L) überlappt.

6. Bremssystem nach einem der vorangehenden Ansprüche, wobei eine obere Fläche (20) des oberen Teils (16) und/oder eine untere Fläche (21) des unteren Teils (17) alternierende Rippen (22) und Nuten (23) aufweisen, die sich vorzugsweise radial von der Längsmittellinie (L) der Apertur (30), vorzugsweise zum Umfang der oberen bzw. der unteren Fläche (20, 21), erstrecken.

7. Bremssystem nach einem der vorangehenden Ansprüche, wobei der elastisch verformbare Dämpfer (15) aus einem Gummi- und/oder gummiähnlichen Material gefertigt ist.

8. Bremssystem nach einem der vorangehenden Ansprüche, wobei die Außenfläche der konvexen Form des Taillenteils (18) einen Radius von 0,8 - 8,0 mm, vorzugsweise von 1,0 - 5,0 mm, besonders vorzugsweise von 1 - 3 mm, aufweist.

9. Bremssystem nach einem der vorangehenden Ansprüche, wobei der Taillenteil (18) eine Höhe (H) von 0,8 - 16 mm, vorzugsweise von 0,8 - 10,0 mm, besonders vorzugsweise von 1,0 - 6,0 mm, aufweist.

10. Bremssystem nach einem der vorangehenden Ansprüche, wobei der untere Teil (17) die Form eines Kegelstumpfs aufweist.

11. Bremssystem nach einem der vorangehenden Ansprüche, wobei der obere Teil (16) die Form eines Zylinders aufweist.

12. Bremssystem nach einem der vorangehenden Ansprüche, wobei das Bremssystem ein ABS-Bremssystem ist.

13. Fahrzeug, umfassend ein Bremssystem nach Anspruch 12.

## Revendications

1. Système de freinage pour un véhicule comprenant au moins un amortisseur élastiquement déformable (15) comprenant une partie supérieure (16) et une partie inférieure (17) séparées par une partie taille (18), une ouverture (30) s'étendant à travers lesdites parties supérieure, inférieure et taille (16, 17, 18) suivant une ligne centrale longitudinale (L), ladite partie taille (18) étant conçue pour recevoir et être retenue sur une partie d'un support (11) en coopération avec lesdites parties supérieure et inférieure (16, 17),
**caractérisé en ce que**
ladite partie taille (18) a une section transversale avec une surface externe saillante par rapport à ladite ligne centrale longitudinale (L) et lorsque ledit amortisseur élastiquement déformable (10) est dans un état détendu, ladite surface externe saillante ayant une forme triangulaire, la forme d'un cône tronqué ou une forme convexe, et ladite surface externe en saillie s'étendant tout autour de la périphérie de ladite partie taille (18).

2. Système de freinage selon l'une quelconque des revendications précédentes, ladite ouverture (30) ayant un diamètre variable avec au moins un premier, un deuxième et un troisième diamètre (D1, D2, D3), ledit troisième diamètre (D3) étant plus grand que ledit premier et ledit deuxième diamètre (D1, D2) lorsque ledit amortisseur élastiquement déformable (15) est dans un état détendu.

3. Système de freinage selon la revendication 2, ladite ouverture (30) ayant une première et une seconde ouverture (31, 32), lesdits premier et second diamètres (D1, D2) étant les diamètres desdites première et seconde ouvertures (31, 32) de ladite ouverture (30).

4. Système de freinage selon la revendication 3, ladite ouverture (30) ayant ledit troisième diamètre (D3) au niveau d'une section centrale de ladite ouverture (30), ladite section centrale correspondant sensiblement à la position de ladite partie taille (18) dudit amortisseur (15) par rapport à ladite ligne centrale longitudinale (L).

5. Système de freinage selon la revendication 4, ladite section centrale de ladite ouverture (30) chevauchant la position de ladite partie taille (18) dudit amortisseur (15) par rapport à ladite ligne centrale longitudinale (L).

6. Système de freinage selon l'une quelconque des revendications précédentes, une surface supérieure (20) de ladite partie supérieure (16) et/ou une surface inférieure (21) de ladite partie inférieure (17) ayant des nervures (22) et des rainures (23) alternées s'étendant de préférence radialement depuis ladite ligne centrale longitudinale (L) de ladite ouverture (30), de préférence vers ladite périphérie desdites surfaces supérieure et inférieure (20, 21) respectivement.

7. Système de freinage selon l'une quelconque des revendications précédentes, ledit amortisseur élastiquement déformable (15) étant en un caoutchouc et/ou un matériau analogue au caoutchouc.

8. Système de freinage selon l'une quelconque des revendications précédentes, ladite surface externe de ladite forme convexe de ladite partie taille (18) ayant un rayon compris entre 0,8 et 8,0 mm, de préférence compris entre 1,0 et 5,0 mm, plus préférablement compris entre 1 et 3 mm.

9. Système de freinage selon l'une quelconque des revendications précédentes, ladite partie taille (18) ayant une hauteur (H) comprise entre 0,8 et 16 mm, de préférence comprise entre 0,8 et 10,0 mm, plus préférablement comprise entre 1,0 et 6,0 mm.

10. Système de freinage selon l'une quelconque des revendications précédentes, ladite partie inférieure (17) ayant la forme d'un cône tronqué.

11. Système de freinage selon l'une quelconque des revendications précédentes, ladite partie supérieure (16) ayant la forme d'un cylindre.

12. Système de freinage selon l'une quelconque des revendications précédentes, ledit système de freinage étant un système de freinage ABS.

13. Véhicule comprenant un système de freinage selon la revendication 12.
